(19) Europäisches Patentamt
European Patent Office
Office européen des brevets

(11) Numéro de publication: **0 054 460**
**A1**

(12) # DEMANDE DE BREVET EUROPEEN

(21) Numéro de dépôt: **81401891.7**

(22) Date de dépôt: **27.11.81**

(51) Int. Cl.³: **G 05 D 13/62**
H 02 P 5/16, H 02 P 5/40
H 02 H 3/247, D 06 F 33/02

(30) Priorité: **12.12.80 FR 8026415**

(43) Date de publication de la demande:
**23.06.82 Bulletin 82/25**

(84) Etats contractants désignés:
**BE CH DE GB IT LI LU NL**

(71) Demandeur: **THOMSON-BRANDT**
**173, Boulevard Haussmann**
**F-75360 Paris Cedex 08(FR)**

(72) Inventeur: **Gas, Jean-Claude**
**THOMSON-CSF SCPI 173, bld Haussmann**
**F-75360 Paris Cedex 08(FR)**

(72) Inventeur: **Roussel, Bruno**
**THOMSON-CSF SCPI 173, bld Haussmann**
**F-75360 Paris Cedex 08(FR)**

(72) Inventeur: **Prunier, Jacques**
**THOMSON-CSF SCPI 173, bld Haussmann**
**F-75360 Paris Cedex 08(FR)**

(74) Mandataire: **Grynwald, Albert et al,**
**THOMSON-CSF SCPI 173, Bld Haussmann**
**F-75360 Paris Cedex 08(FR)**

(54) **Dispositif de commande de la vitesse du moteur électrique d'une machine à laver le linge.**

(57) Dispositif de commande de la vitesse du moteur électrique d'une machine à laver le linge agissant sur la durée de conduction d'un interrupteur (2) en série dans le circuit d'alimentation du moteur (1).

On prévoit un moyen de détection (55) tel qu'un moyen de temporatisation de l'alimentation en courant continu dudit dispositif de commande et un moyen (38) pour ouvrir l'interrupteur (2) en série avec l'alimentation du moteur si et seulement si l'alimentation en courant continu a été coupée pendant une durée dépassant un temps prédéterminé par exemple de l'ordre de 0,7 seconde. Si au moment de la coupure de l'alimentation en courant continu la vitesse était en cours d'augmentation progressive la séquence de variation de vitesse revient à son début.

**EP 0 054 460 A1**

./...

FIG.1
BASE
DE
TEMPS
22
SEQUENCEUR
38
PROGRAMMATEUR
34

# DISPOSITIF DE COMMANDE DE LA VITESSE DU MOTEUR ELECTRIQUE D'UNE MACHINE A LAVER LE LINGE.

L'invention est relative à un dispositif de commande de la vitesse d'un moteur électrique, notamment un moteur à courant continu ou un moteur universel, agissant sur le temps de conduction d'un interrupteur se trouvant en série avec l'alimentation en courant de ce moteur. Elle concerne également une machine à laver le linge qui comprend un tel dispositif pour commander à vitesse variable le moteur entraînant le tambour.

On sait qu'on peut faire varier la vitesse de rotation d'un moteur électrique, notamment un moteur à courant continu ou un moteur universel, en particulier pour l'entraînement du tambour d'une machine à laver le linge, en modifiant, à l'aide d'une alimentation à découpage, la quantité d'énergie électrique fournie à ce moteur. Une alimentation à découpage comporte en général un interrupteur électronique tel qu'un transistor, un thyristor ou un triac interposé entre une source de courant continu ou alternatif et le moteur et qui est commandé pour être conducteur pendant une fraction de la période d'un signal de fréquence déterminée, la puissance fournie au moteur, et donc sa vitesse, étant ainsi fonction de cette fraction.

L'interrupteur pour l'alimentation d'un moteur à courant continu est habituellement un transistor ou un thyristor et la fréquence déterminée est de l'ordre de 14 kilohertz (kHz).

L'interrupteur d'alimentation d'un moteur universel c'est à dire un moteur à collecteur analogue à un moteur à courant continu mais pouvant être alimenté en courant alternatif, est généralement un triac et la fréquence déterminée est celle du secteur, c'est à dire 50 ou 60 Hertz.

Les dispositifs de commande de la vitesse du moteur d'entraînement du tambour d'une machine à laver le linge du type mentionné ci-dessus doivent faire varier cette vitesse selon des programmes prédéterminés. Ils comprennent souvent un circuit électronique, notamment sous forme intégrée, qui pour pouvoir fonctionner doit être alimenté en courant continu. Par ailleurs on sait qu'il faut prendre des précautions particulières pour la montée en vitesse du moteur avant d'atteindre celle correspondant à l'essorage car, sans ces précautions, le linge pourrait être mal réparti dans le tambour et provoquer un balourd dommageable pour la machine. Il faut donc également prévoir des sécurités empêchant après un arrêt du moteur dû, par exemple, à une panne de courant, que celui-ci ne reprenne la vitesse correspondant à l'essorage.

Le dispositif de commande selon l'invention permet de satisfaire à ces conditions de sécurité sans entraîner un arrêt du fonctionnement de la machine alors qu'un défaut a été détecté mais que ce défaut survient dans des conditions propres à ne provoquer aucun dommage à cette machine.

Le dispositif de commande selon un programme de la vitesse d'un moteur électrique d'entraînement du tambour d'une machine à laver le linge selon l'invention, dispositif qui agit sur la durée de conduction d'un interrupteur en série dans le circuit d'alimentation du moteur, est caractérisé en ce qu'il comporte un moyen de détection de l'alimentation en courant dudit dispositif, un moyen pour ouvrir l'interrupteur en série avec l'alimentation du moteur si et seulement si l'alimentation en courant a été coupée pendant une durée dépassant un temps prédéterminé et pour qu'après une coupure d'une durée inférieure à ce temps prédéterminé le moteur reprenne la vitesse qu'il avait avant cette coupure si celle-ci était constante ou pour que la séquence de variation de vitesse revienne à son début si la vitesse au moment de la coupure était en cours d'augmentation progressive.

Selon un autre de ses aspects, l'invention vise un dispositif de commande du type mentionné ci-dessus dans lequel on prévoit une entrée de contreréaction sur laquelle est appliqué un signal représentant la vitesse réelle du moteur, par exemple, grâce à une génératrice tachymétrique entraînée par ce moteur. Selon l'invention, pour assurer la sécurité du fonctionnement de la machine à laver l'alimentation du moteur est interrompue si et seulement si le signal représentant la vitesse réelle du moteur appliqué sur l'entrée de contreréaction a disparu pendant une durée supérieure à un temps déterminé, par exemple de l'ordre de 1 seconde.

Le dispositif de commande comprend de préférence un générateur d'une fréquence de consigne représentant la vitesse désirée pour le moteur et un moyen numérique de conversion de cette fréquence en un nombre binaire représentant la durée de conduction de l'interrupteur dans le circuit d'alimentation.

Pour réaliser un tel dispositif de commande, on peut faire appel à la technique des circuits intégrés numériques qui est plus aisée à mettre en oeuvre que la technique des circuits intégrés analogiques.

Dans une réalisation le dispositif comprend un oscillateur à fréquence fixe, ou base de temps, et un élément de multiplication de cette fréquence fixe par un nombre représentant la vitesse de consigne. Cette base de temps peut être également utilisée pour engendrer la fréquence déterminée de variation de la conduction de l'interrupteur. On peut ainsi aisément modifier la fréquence déterminée, ou fréquence de découpage, par exemple en agissant sur le coefficient de multiplication ou de division de la fréquence fixe fournie par la base de temps, et, de cette manière, permettre la commande de plusieurs types d'interrupteurs. Dans une réalisation, le dispositif de commande permet d'agir à volonté sur un triac ou sur un transistor ; la fréquence déterminée est alors de 50 hertz pour la commande du triac et de 14 kHz pour la commande du transistor.

D'autres caractéristiques et avantages de l'invention apparaitront avec la description de certains de ses modes de réalisation, cette description étant effectuée en se référant aux dessins ci-annexés sur lesquels :

La figure 1 est un schéma d'un dispositif de commande selon l'invention qui est réalisable sous forme de circuit intégré numérique, ainsi que du moteur, de l'alimentation, d'un programmateur et d'autres organes associés à ce dispositif ;

La figure 2 est un schéma de branchement du dispositif représenté sur la figure 1 ;

La figure 3a est un diagramme de variation de la vitesse du tambour d'une machine à laver équipée du dispositif représenté sur les figures let 2 ;

La figure 3b est un tableau de fonctionnement du dispositif et du programmateur de la figure 1 ;

La figure 4 est une variante de celle de la figure 2 ;

Les figures 5a et 5b sont, respectivement, un diagramme et un tableau analogues à ceux des figures 3a et 3b, mais correspondant au schéma de la figure 4 ;

La figure 6 est un organigramme représentant le fonctionnement d'un séquenceur faisant partie du dispositif de commande de la figure 1, et ;

La figure 7 est un autre organigramme montrant les diverses possibilités d'utilisation du dispositif de commande de la figure 1.

L'exemple de réalisation de l'invention qui va être décrit en relation avec les figures, s'applique à la commande d'un moteur 1, de type continu ou universel, pour l'entraînement du tambour (non représenté) d'une machine à laver le linge.

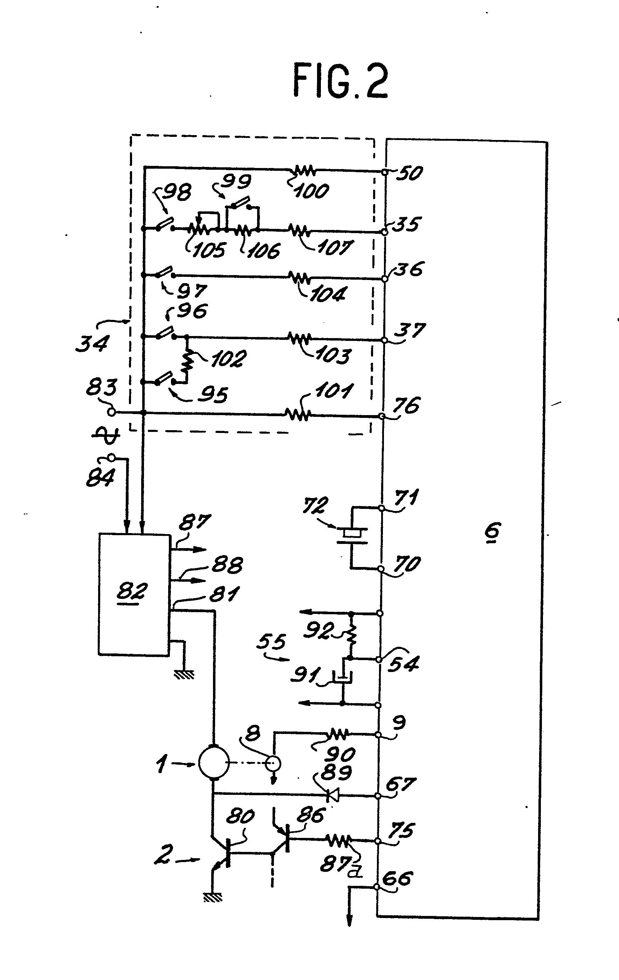

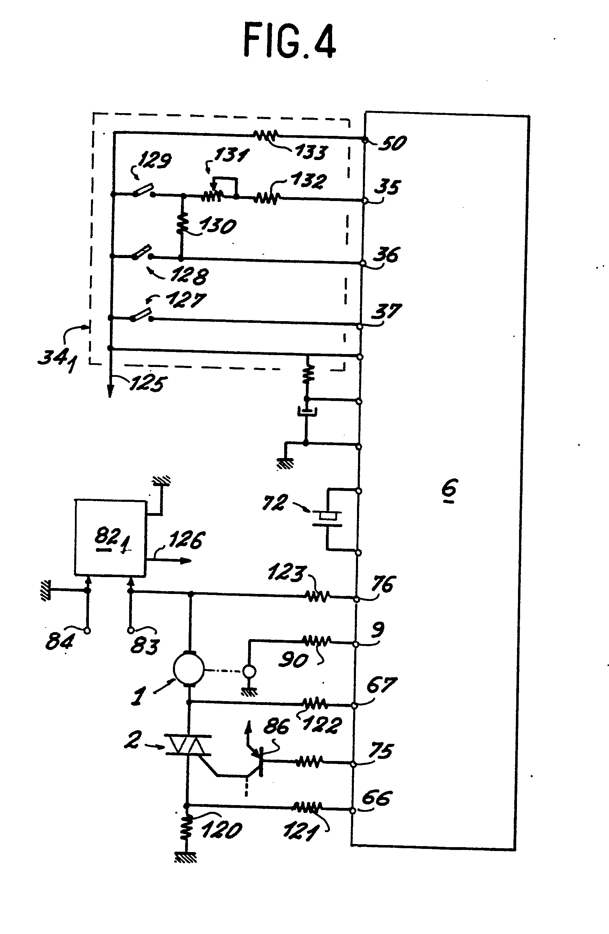

Le courant continu ou alternatif est fourni au moteur par une alimentation comportant en série un interrupteur 2 tel qu'un transistor (figure 2) ou un triac (figure 4).

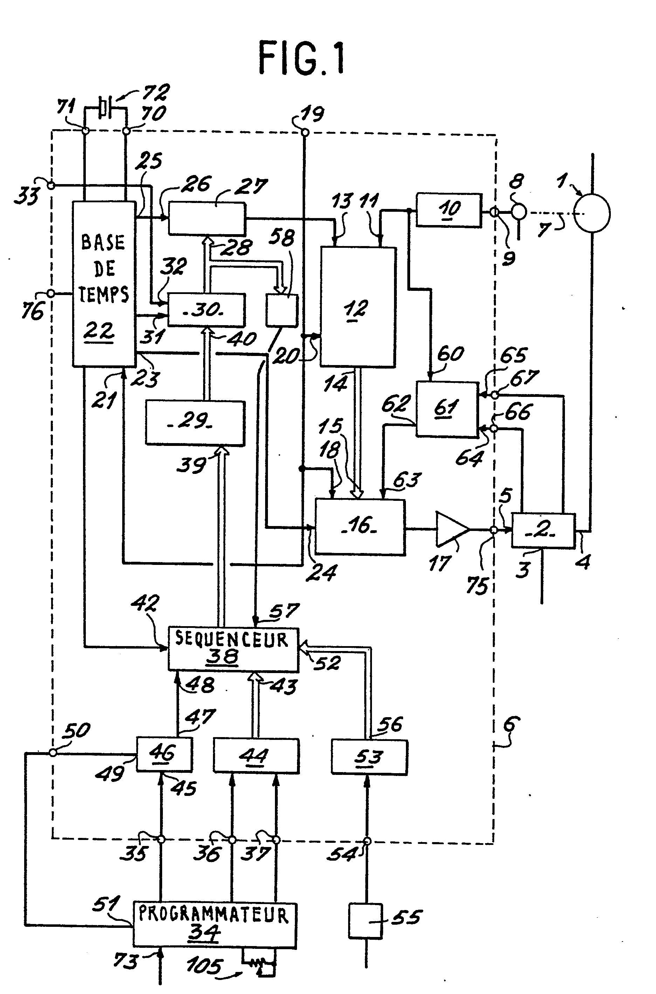

L'interrupteur électronique 2 (figure 1) présente une borne d'entrée 3, une borne de sortie 4 et une électrode de commande 5 recevant des impulsions d'un circuit de commande 6 qui sont telles que l'interrupteur 2 est conducteur pendant une fraction de chaque période d'un signal de découpage (de fréquence 50 Hz ou 14 kHz).

Le signal engendré par le circuit 6 permet de doser la puissance fournie au moteur 1 de façon que ce dernier tourne à la vitesse désirée.

Sur l'arbre 7 du moteur 1 est monté un élément tachymétrique 8, telle qu'une route phonique ou analogue, engendrant un signal électrique dont la fréquence est proportionnelle à la vitesse de rotation dudit moteur. Ce signal est appliqué sur une entrée 9 de contre-réaction du circuit 6.

Le circuit 6 comporte, relié à l'entrée 9, un bloc 10 de mise en forme dont la sortie est connectée à l'entrée 11 de contre-réaction d'un organe 12 destiné à convertir une fréquence de consigne fc, appliquée sur son entrée 13, représentant la vitesse désirée pour le moteur, en un signal numérique, ou nombre, présenté sur sa sortie 14 et représentant l'instant de déclenchement de l'interrupteur 2 au cours d'une période du signal de découpage, c'est à dire le temps pendant lequel l'interrupteur 2 sera conducteur au cours d'une période de ce signal.

Le convertisseur 12 comporte par exemple un compteur-décompteur. Il assure une action de régulation du type à la fois proportionnel et intégrale et telle que le signal de sortie est limité lors des régimes transitoires. Les limites dépendent du type de moteur. A cet effet, le convertisseur présente une entrée 20 sur laquelle est appliqué un chiffre binaire qui, selon sa valeur, adapte les limites au type d'interrupteur ou de moteur.

La sortie 14 du convertisseur 12 est connectée à l'entrée 15 d'un générateur de phase 16 destiné à engendrer les impulsions de commande de l'interrupteur 2 qui sont transmises à l'électrode 5 par l'intermédiaire d'un amplificateur 17.

Le générateur de phase 16 comprend deux parties : une première partie permettant la commande d'un transistor et qui transforme, par une simple division, le nombre appliqué sur l'entrée 15 en un rapport cyclique d'un signal à 14KHz, et une seconde partie, pour la commande d'un triac, qui transforme ledit nombre en un retard de phase d'un signal alternatif à 50Hz pour le déclenchement d'un triac.

Le générateur 16 présente une entrée de commande 18 sur laquelle est appliquée un signal linaire, O ou 1, qui, selon sa valeur, fait intervenir la première ou la seconde partie, c'est-à-dire permet la commande d'un transistor ou d'un triac . Cette entrée 18 est connectée à une entrée 19 du circuit 6 qui est reliée soit au point de potentiel le plus élevé de l'alimentation en courant continu fournissant l'énergie au moteur lorsque l'interrupteur 2 est un transistor (figure 2), soit au point de potentiel le moins élevé d'une alimentation en courant continu lorsque l'interrupteur est un triac (figure 4).

La borne 19 est également connectée à l'entrée 20 du convertisseur 12.

Une liaison est établie entre l'entrée 19 et une entrée 21 d'un oscillateur, ou base de temps, 22 présentant une sortie 23 reliée à une entrée 24 du générateur de phase 16 et délivrant un signal à la fréquence de découpage, fonction du signal appliqué sur l'entrée 21. La base de temps 22 comporte une entrée reliée à une borne 76 du circuit 6, pour permettre la synchronisation avec le secteur des signaux qu'elle émet.

L'oscillateur 22 présente une autre sortie 25 délivrant un signal à fréquence fixe $f_r$ appliqué sur une entrée 26 d'un multiplicateur de rythme binaire 27, ou multiplicateur de fréquence, dont la sortie délivre le signal $f_c$ appliqué sur l'entrée 13 du convertisseur 12.

Le multiplicateur 27 est destiné à multiplier la fréquence $f_r$ par un nombre X, appliqué sur son entrée 28, fonction de la vitesse désirée pour le moteur 1. Dans l'exemple, la relation entre les fréquences $f_c$ et $f_r$ et le nombre X est :

$$f_c = \frac{X}{256} . f_r$$

Le nombre X est un mot de consigne compris entre 0 et 255. Il est délivré par une mémoire morte 29 reliée à l'entrée 28 du multiplicateur 27 par l'intermédiaire d'un registre 30. Ce dernier présente une entrée d'horloge 31 sur laquelle est appliqué un signal d'horloge, engendré par la base de temps 22. La mémoire 29 contient un ensemble de mots de consigne correspondant à la gamme des vitesses du moteur 1.

Le fonctionnement du registre 30 est également commandé par un chiffre binaire appliqué sur une autre entrée 32 reliée à une entrée 33 du circuit 6. Si l'entrée 33 est connectée au point de potentiel le plus élevé de l'alimentation continue le circuit est destiné à commander la vitesse du moteur 1 selon un programme imposé par, d'une part, un programmateur électro-mécanique 34 à trois sorties reliées à trois entrées respectives 35, 36 et 37 du circuit 6 et, d'autre part, un séquenceur 38 faisant partie du circuit 6 et dont la sortie est reliée à l'entrée d'adressage 39 de la mémoire morte 29. Si l'entrée 33 du circuit 6 est reliée au point de potentiel le moins élevé de l'alimentation continue, par exemple la masse, le programme de variation de vitesse n'est imposé ni par le programmateur électro-mécanique 34 ni par le séquenceur 38, mais par un microprocesseur (non représenté) distinct du circuit 6. Dans ce dernier cas, une liaison directe (non montrée) est établie entre l'entrée 37 et l'entrée de données 40 du registre 30, l'entrée 37 étant alors connectée à la sortie de données du microprocesseur et une autre connexion directe (également non montrée) est établie entre l'entrée 36 du circuit 6 et l'entrée d'horloge 31 du registre 30.

Dans ce qui suit, sauf indication contraire, on se réferera à l'utilisation du circuit 6 avec le programmateur 34.

Le séquenceur 38, qui n'intervient qu'en combinaison avec le programmateur électro-mécanique 34, est commandé par un signal d'horloge, appliqué sur son entrée d'horloge 42, fourni par la base de temps 22.

Les entrées 36 et 37 du circuit 6 sont reliées à une entrée de données 43 du séquenceur 38 par l'intermédiaire d'un organe 44 d'antirebond permettant de s'affanchir des éventuels rebonds des contacts mécaniques du programmateur 34.

Lorsqu'un signal logique est appliqué sur l'entrée 36 et/ou 37, ce signal doit être confirmé, c'est à dire se maintenir ou se répeter après un temps supérieur à 20 milli-secondes. Ainsi lorsque le programmateur 34 est alimenté par son entrée 73 par le secteur, le signal doit apparaître pour deux alternances successives pour qu'il soit pris en compte sur l'entrée 43.

L'entrée 35 du circuit 6, sur laquelle est appliqué un signal analogique représentant la vitesse d'essorage désirée pour le tambour de la machine à laver, est connectée à une entrée 45 d'un convertisseur analogique-numérique 46 dont la sortie de données 47 est connectée à une autre entrée de données 48 du séquenceur 38. Ce convertisseur 46 présente une entrée de référence 49 sur laquelle est appliqué un signal de référence de courant grâce à une connexion entre cette entrée 49 et une entrée 50 du circuit 6. L'entrée 50 est reliée à une sortie 51 du programmateur 34.

Le séquenceur 38 présente encore une autre entrée 52 connectée à la sortie d'un circuit 53 dont l'entrée est reliée à une entrée 54 du circuit 6 connectée à la sortie d'un dispositif de temporisation 55. L'état de l'entrée 54 dépend du fonctionnement de l'alimentation en courant continu connectée au circuit 6. Si cette dernière est en fonctionnement, l'entrée 54 reçoit un signal continu d'un premier niveau. Si cette alimentation est interrompue pendant un temps, déterminé par le dispositif 55, au moins égal à 0,7 seconde dans l'exemple, le signal appliqué sur l'entrée 54 tombe au dessous d'un second niveau, inférieur au premier.

Le circuit 53 émet un signal numérique sur sa sortie 56 qui permet d'interrompre la rotation du moteur lorsque l'alimentation a été interrompue pendant un temps supérieur à 0,7 seconde environ.

Si la coupure de l'alimentation a été inférieure à O,7 seconde, l'entrée 54 reçoit un signal d'amplitude comprise entre les deux niveaux et le dispositif 53 produit un signal numérique sur sa sortie 56, reliée à l'entrée 52 du séquenceur 38, qui représente une coupure brève et qui permet de ramener, le cas échéant, la séquence du fonctionnement imposée par le séquenceur 38 à un point correspondant au début d'une augmentation progressive de vitesse de rotation du tambour.

Le séquenceur 38 comporte une entrée 57 reliée à la sortie d'un détecteur de rampe 58 dont l'entrée est connectée à la sortie de données du registre 30. Le signal appliqué sur l'entrée 57 est à 1 bit et selon sa valeur, 0 ou 1, il indique si la vitesse imposée est à variation progressive ou non.

La sortie du bloc 10 de mise en forme est connectée à une entrée 60 d'un circuit de sécurité 61 dont la sortie 62 est connectée à une entrée d'arrêt 63 du générateur de phase 16. Lorsqu'un signal est appliqué sur l'entrée 63, l'interrupteur 2 est bloqué, c'est à dire qu'aucune impulsion n'est produite par le générateur 16. Un tel blocage intervient lorsque l'entrée 60 du circuit 61 ne reçoit pas de signal pendant au moins une seconde environ, c'est à dire en cas de fonctionnement anormal soit du moteur 1, soit du tachymètre 8, soit du circuit 10, soit enfin d'une liaison entre ces éléments.

Le circuit de sécurité 61 présente encore deux autres entrées, respectivement 64 et 65, reliées à des entrées 66 et 67 du circuit 6. Sur l'entrée 66 est appliqué un signal représentant l'intensité du courant traversant l'interrupteur 2 et sur l'entrée 67 est appliqué un signal représentant la tension aux bornes de cet interrupteur.

Les signaux appliqués sur les entrées 66 et 67 permettent, d'une part, de déclencher et de protéger l'interrupteur 2 lorsque celui-ci est un triac et, d'autre part, de protéger ledit interrupteur lorsqu'il est constitué par un transistor.

Lorsque l'interrupteur est un triac le signal appliqué sur l'entrée 65 contribue au fonctionnement : si le triac est amorcé, c'est à dire si la tension à l'entrée 65 est basse, un signal est appliqué sur l'entrée 63. Ce signal disparaît lorsque le triac est désamorcé, c'est-à-dire lorsque la tension sur la borne 65 est haute. Si l'intensité du courant traversant le triac dépasse 18 ampères environ, comme détecté par la valeur du signal appliqué sur l'entrée 64, un signal apparaît sur la sortie 62.

Dans le cas où l'interrupteur 2 est un transistor si le signal appliqué sur l'entrée 65 indique que la tension collecteur-émetteur dépasse 2,5 V environ dans le cas d'une alimentation de plus ou moins 4,5 V, un signal d'arrêt est appliqué sur l'entrée 63 et le transistor est bloqué. Il en est de même lorsque le signal sur l'entrée 64 indique que le courant traversant ledit transistor a une intensité excessive.

En variante, la sortie 62 est reliée au convertisseur 12 et non au générateur de phase 16.

Le circuit 61 comporte, par exemple, des détecteurs de seuil connectés aux entrées 64 et 65 pour assurer les fonctions mentionnées ci-dessus.

Le circuit 6 présente deux entrées 70 et 71 reliées à des entrées respectives de la base de temps 22 et auxquelles est connecté un résonateur céramique 72 accordé sur la fréquence de 455 KHz.

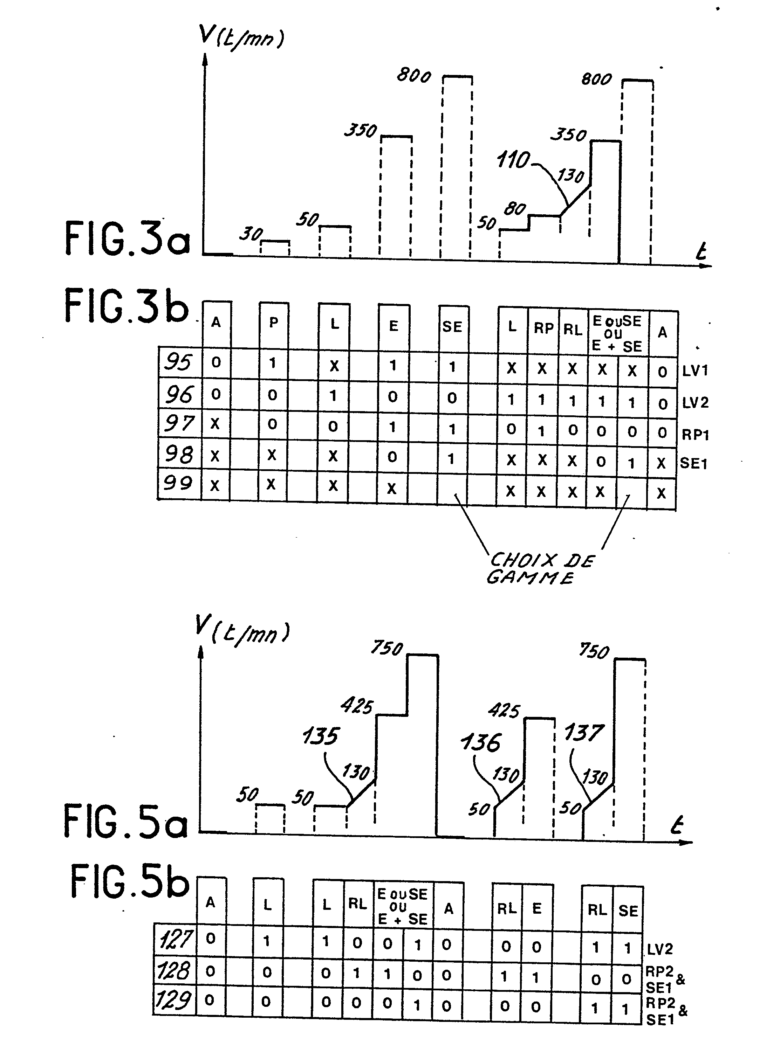

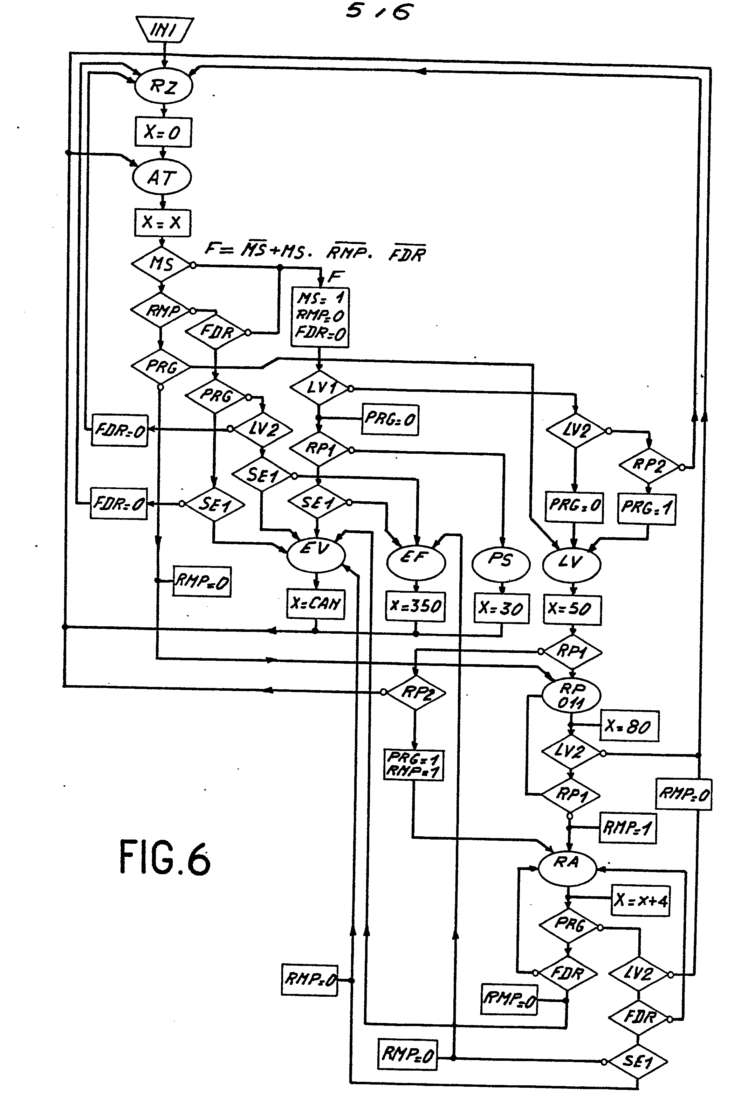

Comme on le verra plus loin en relation avec les figures 2 à 6 le séquenceur 38 correspond à deux programmes, c'est-à-dire à deux programmateurs 34 différents. Le premier de ces programmateurs correspond à l'exemple des figures 2 et 3 tandis que le second des programmateurs correspond à l'exemple des figures 4 et 5.

La fonction du séquenceur 38 est, d'une part, de transmettre à l'entrée d'adressage 39 de la mémoire morte 29 le signal de consigne de vitesse fourni par le convertisseur analogique-numérique 46 et, d'autre part, d'imposer un programme à huit valeurs numériques, ou états, représentant : une remise à zéro (RAZ), une position d'attente (A), une commande (P) de positionnement du tambour telle que la vitesse de rotation de ce dernier soit d'environ 30t/mn, une commande de lavage (L) à vitesse de rotation d'environ 50 t/mn, une commande (RP) de répartition du linge dans le tambour au cours de laquelle le tambour tourne à environ 80 t/mn, une commande (RL) de montée en vitesse à variation ou rampe lente, une commande (E) d'essorage à vitesse fixe et une commande (SE) d'essorage à vitesse variable imposée par le signal appliqué sur l'entrée 35 du circuit 6.

Le circuit 6 étant sous forme d'un circuit intégré numérique, le séquenceur 38 faisant partie de ce circuit est constitué par un réseau logique programmable (PLA) qui présente l'avantage d'être modifiable par modification d'un masque se trouvant à un seul niveau (dans un seul plan) ainsi sans changement notable dans l'ensemble du processus de fabrication du circuit intégré. Dans une réalisation le masque servant au contenu de la mémoire 29 et celui correspondant à la fabrication du circuit 58 de consigne de fin de rampe sont au même niveau que le masque correspondant au séquenceur 38.

Comme on le verra plus loin les entrées 36 et 37 reçoivent des signaux, respectivement de répartition et de lavage, qui peuvent chacun prendre trois états. Sur les entrées 35, 36 et 37 on ne tient compte que des valeurs relatives des signaux par rapport à l'alimentation afin qu'une éventuelle variation du courant d'alimentation n'ait pas d'effet.

Le signal d'horloge appliqué sur l'entrée 31 du registre 30 détermine la durée de la rampe de variation de vitesse.

On se réfère maintenant à la figure 2.

Dans cet exemple l'interrupteur 2 est un transistor de puissance 80 du type NPN dont l'émetteur est relié à la masse et dont le collecteur est relié à une borne du moteur 1 qui est du type à courant continu à aimants permanents en ferrite et dont l'autre borne est connectée au point 81 de potentiel le plus élevé d'une alimentation 82 en courant continu redressant le courant alternatif fourni, entre phase 83 et neutre 84, par le secteur.

La base du transistor 80 est reliée au collecteur d'un transistor PNP 86 dont l'émetteur est relié à une borne 87 de l'alimentation 82 qui délivre un potentiel de + 4,5v et dont la base est reliée à la sortie 75 du circuit 6 qui est connectée à la sortie de l'amplificateur 17 (figure 1) par l'intermédiaire d'une résistance $87_a$ de valeur 1,5 K Ω dans l'exemple. L'entrée 66 du circuit 6 est reliée à la sortie 88 de plus bas niveau de l'alimentation 82 sur laquelle le potentiel est de - 4,5v.

L'entrée 67 du circuit 6 est reliée à l'anode d'une diode 89 dont la cathode est connectée à la borne du moteur 1 qui est reliée au collecteur du transistor 80.

La sortie du tachymètre 8 est reliée à la borne 9 par l'intermédiaire d'une résistance 90 de valeur 100 KΩ .

Le circuit de temporisation 55 comprend, d'une part, un condensateur 91 de capacité 10 µF dont une armature est reliée à l'entrée 54 et dont l'autre armature est reliée à la sortie 88 de l'alimentation 82 et, d'autre part, une résistance 92 de valeur 220 K Ω dont une borne est connectée à l'entrée 54 et dont l'autre borne est reliée à la sortie 87 à + 4,5v de l'alimentation 82.

Le programmateur 34 comporte, dans l'exemple, cinq interrupteurs respectivement 95, 96, 97, 98 et 99. Les interrupteurs 95, 96, 97 et 98 ont une borne commune reliée à la phase 83 du secteur, laquelle est également reliée, par l'intermédiaire d'une résistance 100 de valeur 680 K Ω, à l'entrée 50 du circuit 6, ainsi qu'à l'entrée de synchronisation 76 de ce même circuit par l'intermédiaire d'une autre résistance 101 de valeur 330 K Ω .

La seconde borne de l'interrupteur 95 est reliée à la seconde borne de l'interrupteur 96 par l'intermédiaire d'une résistance 102 de valeur 47 K Ω . Cette seconde borne de l'interrupteur 96 est elle-même connectée à l'entrée 37 du circuit 6 par l'intermédiaire d'une résistance 103 de valeur 100 K Ω .

L'interrupteur 97 est connecté à l'entrée 36 du circuit 6 par l'intermédiaire d'une résistance 104 de valeur 150 K Ω .

La seconde borne de l'interrupteur 98 est reliée à une borne d'un potentiomètre 105 de résistance totale 100 K Ω et dont l'autre borne est reliée à une résistance 106 de valeur 100 K Ω elle-même reliée à l'entrée 35 du circuit 6 par l'intermédiaire d'une autre résistance 107 également de valeur 100 K Ω .

L'interrupteur 99 est en parallèle sur la résistance 106.

Le fonctionnement du montage représenté sur la figure 2 apparait après condisération des figures 3a et 3b. La figure 3a est un diagramme de variation en fonction du temps t, porté en abscisses, de la vitesse v de rotation du tambour de la machine à laver.

La figure 3b est un tableau indiquant les états des interrupteurs 95 à 99 aux instants correspondant au diagramme de la figure 3a.

Dans ce tableau, qui fait partie intégrante de la description du présent brevet, le chiffre O correspond à l'ouverture de l'interrupteur correspondant, le chiffre 1 à sa fermeture, et la lettre X à un état indifférent de l'interrupteur. La ligne supérieure correspond aux états du séquenceur 38 : A signifie la position d'attente pour laquelle la vitesse de rotation du tambour est nulle, P correspond à une rotation du tambour à une vitesse de l'ordre de 30 t/mn pour son positionnement, L (lavage) correspond à une vitesse de rotation du tambour de 50 t/mn, E (essorage) à une vitesse de rotation d'environ 350 t/mn, SE correspond à un super essorage à une vitesse réglable, à l'aide du potentiomètre 105, qui peut atteindre 800 t/mn, RP est une phase de répartition du linge dans le tambour à une vitesse de rotation de l'ordre de 80 t/mn et RL signifie "rampe lente" et correspond à une augmentation progressive de vitesse de 80 à 130 t/mn pendant 50 secondes ; cette rampe est représentée par le segment de droite 110 sur le diagramme de la figure 3.

L'interrupteur 99 élargit la possibilité de choix de la vitesse de rotation du tambour pendant l'essorage. Cette propriété est indiquée par "choix de gamme" sur le tableau de la figure 3b.

Sur les figures 3a et 3b les états obligatoirement successifs sont représentés jointifs tandis que les états pouvant être indépendants les uns des autres sont représentés séparés par des colonnes vides sur la figure 3b. Toutefois, ces derniers états peuvent se succéder sans interruption.

On se réfère maintenant aux figures 4, 5a et 5b qui correspondent au second programme prévu dans le séquenceur 38.

Dans cette réalisation (figure 4) le moteur 1 est du type universel et l'interrupteur 2 est un triac dont la gâchette est reliée à la sortie 75 du circuit 6 par l'intermédiaire du transistor 86 de la même manière que la base du transistor 80 (figure 2) est reliée à ladite sortie 75.

La borne du triac 2 qui est opposée à celle qui est connectée au moteur 1 est reliée à la masse par l'intermédiaire d'une résistance 120 de valeur 50 m Ω et la borne commune à cette résistance 120 et au triac 2 est reliée à l'entrée 66 du circuit 6 par l'intermédiaire d'une résistance 121 de valeur 100 K Ω .

L'autre borne du moteur universel 1 est reliée à la phase 83 du secteur dont le neutre 84 est à la masse.

La borne commune au triac 2 et au moteur 1 est reliée à l'entrée 67 du circuit 6 par l'intermédiaire d'une résistance 122 de 470 K Ω .

La borne de phase 83 est reliée à l'entrée de synchronisation 76 du circuit 6 par l'intermédiaire d'une résistance 123 de 100 K Ω .

Le programmateur $34_1$ présente une ligne commune 125 reliée à une sortie 126 de l'alimentation $82_1$ en courant continu redressant le courant fourni par le secteur. Le potentiel sur cette ligne 125 est, dans l'exemple, de + 9v.

Le programmateur $34_1$ comporte trois interrupteurs 127, 128 et 129 ayant tous une borne reliée à la ligne 125. Les secondes bornes des interrupteurs 127 et 128 sont reliées directement aux entrées respectivement 37 et 36. La seconde borne de l'interrupteur 128 est également connectée à la seconde borne de l'interrupteur 129 par l'intermédiaire d'une résistance 130 de valeur 2,2 K Ω . Cette seconde borne de l'interrupteur 129 est reliée à l'entrée 35 par l'intermédiaire d'un potentiomètre 131 de résistance totale 2,2 K Ω et d'une résistance en série 132 de valeur 2,2 K Ω .

L'entrée 50 est reliée à la ligne 125 par l'intermédiaire d'une résistance 133 de valeur 15K Ω .

Le potentiomètre 131 correspond au potentiomètre 105 ; il permet de régler la vitesse de rotation du tambour de la machine lors de l'essorage.

La séquence de variation de vitesse apparait après considération du diagramme de la figure 5a et du tableau de la figure 5b qui correspondent respectivement au diagramme de la figure 3a et au tableau de la figure 3b.

Dans ce cas, on prévoit trois "rampes lentes" 135, 136 et 137 (figure 5a) qui correspondent à une augmentation progressive de la vitesse de rotation du tambour de 50 t/mn à 130 t/mn pendant 20 secondes. On ne prévoit pas de répartition mais deux essorages à des vitesses de rotation réglables qui ont des valeurs différentes, l'une d'au maximum 425 t/mn et l'autre d'au plus 750 t/mn. Sur les entrées 36 et 37 sont appliqués des signaux à trois états. Chacun de ces états correspond à un rapport entre intensités de courant.

$I_1$ étant l'intensité du courant entrant en 36 ou 37 et $I_o$ l'intensité du courant de référence sur l'entrée 50, dans un exemple le premier état correspond à $I_1 \leqslant 0,5\ I_o$, le second état à $3,5I_o \leqslant I_1 \leqslant 5,2\ I_o$ et le troisième à $I_1 \geqslant 5,8\ I_o$.

Si l'entrée 36 reçoit le second état, le séquenceur 38 reconnait que c'est le programmateur $34_1$ qui est utilisé, tandis que si cette entrée 36 reçoit le troisième état ce séquenceur 38 reconnait le programmateur 34. Le premier état est le même pour les deux types de programmateur.

La figure 6 est un organigramme, faisant partie intégrante de la présente description, qui représente toutes les fonctions réalisées par le séquenceur 38. Cet organigramme permet à l'homme de métier de réaliser ce séquenceur en circuit intégré numérique.

Dans cet organigramme les "ovales" correspondent à des états internes du séquenceur. RZ signifie remise à zéro, AT signifie attente, PS positionnement du tambour, LV lavage, RP répartition, RA rampe, EF essorage à vitesse constante et EV essorage à vitesse variable.

MS est un signal numérique égal à O en cas de coupure longue de l'alimentation, et égal à 1 en cas de coupure brève (inférieure à O,7S).

PRG est un signal égal à O lorsqu'on utilise le programmateur 34 représenté sur la figure 2, et égal à 1 lorsqu'on utilise le programmateur électro-mécanique $34_1$ représenté sur la figure 4.

RMP est un signal égal à 0 lorsqu'une rampe n'est pas demandée ou est terminée et égal à 1 lorsque la rampe est demandée ou en cours d'exécution.

FDR est un signal égal à O lorsque la rampe n'est pas demandée ou est en cours d'exécution, et égal à 1 lorsque la rampe est terminée et l'essorage est en cours.

X signifie la vitesse de rotation du tambour en tours par minute et X = CAN signifie que la vitesse doit être celle imposée par le convertisseur numérique/analogique 46 (figure 1).

Les indications LV1, LV2, RP1, RP2 et SEI sont des états internes du séquenceur 38 qui correspondent à des positions des interrupteurs du programmateur électro-mécanique 34 ou $34_1$ indiquées sur la colonne de droite des tableaux des figures 3b et 5b.

Lors d'une coupure brève, les signaux suivants sont conservés en mémoire : F (défini sur la figure 6), PRG, RMP et FDR.

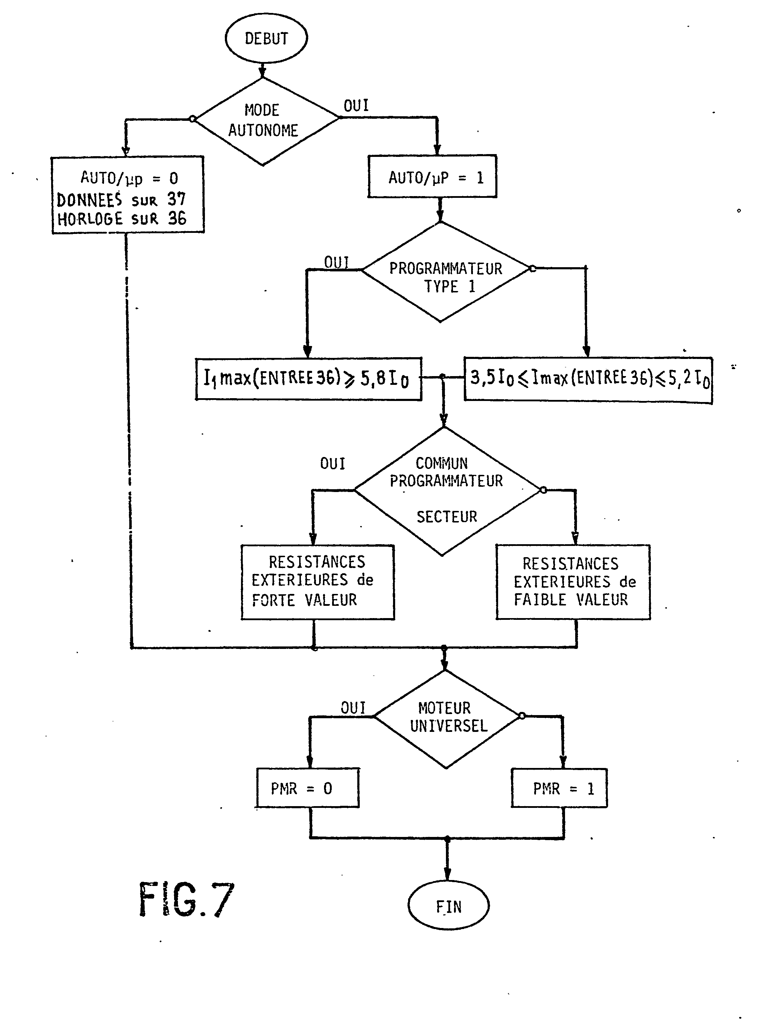

La figure 7 est un organigramme qui montre les diverses possibilités d'utilisation du circuit 6 de l'invention.

Dans cet organigramme "mode autonome" signifie l'utilisation du circuit 6 avec un programmateur électro-mécanique et non avec un microprocesseur (uP)."Programmateur type 1" signifie que l'on fait appel au programmateur électro-mécanique représenté sur la figure 2. PMR est le signal représentant le type d'interrupteur et qui doit être appliqué sur l'entrée 19.

Les intensités relatives de courant $I_1$ max appliquées sur l'entrée 36, qui permettent de reconnaitre si on a affaire au programmateur 34 ou au programmateur $34_1$, sont déterminées par les résistances externes au circuit 6.

## REVENDICATIONS

1. Dispositif de commande selon un programme de la vitesse d'un moteur électrique d'entraînement du tambour d'une machine à laver le linge agissant sur la durée de conduction d'un interrupteur (2) en série dans le circuit d'alimentation du moteur (1), caractérisé en ce qu'il comporte un moyen de détection (55) de l'alimentation en courant dudit dispositif et un moyen (38) pour ouvrir l'interrupteur (2) en série avec l'alimentation du moteur si et seulement si cette alimentation en courant a été coupée pendant une durée dépassant un temps prédéterminé, par exemple 0,7 seconde.

2. Dispositif selon la revendication 1, caractérisé en ce qu'il comporte un moyen (38) pour qu'après une coupure de durée inférieure au temps prédéterminé le moteur reprenne la vitesse qu'il avait avant cette coupure si celle-ci était constante ou pour que la séquence de variation de vitesse revienne à son début si la vitesse au moment de la coupure était en cours d'augmentation progressive.

3. Dispositif selon la revendication 1 ou 2, caractérisé en ce que la durée de conduction de l'interrupteur (2) en série dans le circuit d'alimentation du moteur (1) étant fonction d'un signal électrique, dont la fréquence représente la vitesse désirée, engendré par un générateur de fréquence de consigne (fc), ledit dispositif comprend en outre une entrée (9) de contreréaction sur laquelle est appliqué un signal dont la fréquence (ft) représente la vitesse réelle du moteur, et un moyen pour ouvrir l'interrupteur en cas de disparition du signal sur l'entrée (9) de contreréaction pendant une durée dépassant un temps déterminé par exemple de l'ordre de 1 seconde.

4. Dispositif selon l'une quelconque des revendications précédentes, caractérisé en ce que l'interrupteur (2) étant un transistor dont la durée de conduction est fonction d'un signal électrique dont un paramètre, notamment la fréquence, représente la vitesse,il comprend une entrée (67) de détection de la tension collecteur-émetteur de ce transistor et un moyen (61) pour le bloquer lorsque cette tension dépasse une valeur limite.

5. Dispositif selon l'une quelconque des revendications précédentes, caractérisé en ce que la durée de conduction de l'interrupteur (2) étant fonction d'un signal électrique dont la fréquence représente la vitesse désirée et qui est engendré par un générateur de fréquence de consigne (fc), comportant un oscillateur (22) à fréquence fixe, ou base de temps, et un multiplicateur (27) pour multiplier cette fréquence fixe par un nombre (X) qui est fonction de la valeur de consigne de la vitesse, la fréquence multipliée constituant la fréquence de consigne (fc),et le nombre (X) par lequel est multipliée la fréquence fixe étant fourni par une mémoire (29) contenant un ensemble de tels nombres représentant des vitesses du moteur, ledit dispositif comprend un séquenceur (38) pour que chaque nombre dudit ensemble soit extrait de la mémoire selon un ordre déterminé afin de produire une séquence de variation de vitesse.

6. Dispositif selon la revendication 5, caractérisé en ce que les nombres de consigne sont fournis au multiplicateur de fréquence (27) à la cadence d'un signal d'horloge engendré à partir de la base de temps (22).

7. Dispositif selon la revendication 5 ou 6, caractérisé en ce que le séquenceur permet au moins deux séquences différentes de variation de vitesse.

8. Dispositif selon l'une quelconque des revendications 5 à 7, caractérisé en ce que le séquençeur présente des entrées de commande connectables aux sorties d'un programmateur électromécanique (34) afin que la séquence soit fonction de la condition ouverte ou fermée des interrupteurs de ce programmateur.

9. Dispositif selon la revendication 8, caractérisé en ce qu'il comprend un moyen d'anti-rebond (44) entre l'entrée de commande du séquenceur (38) et des entrées (36, 37) connectables aux sorties du programmateur.

10. Dispositif selon l'une quelconque des revendications 5 à 9, caractérisé en ce que l'ouverture de l'interrupteur est réalisée à partir du séquenceur (38) qui présente une entrée (52) reliée au moyen de détection (55) de l'alimentation, le séquenceur extrayant ainsi de la mémoire un nombre représentant l'arrêt du moteur.

11. Dispositif selon l'une quelconque des revendications précédentes, caractérisé en ce qu'il comprend une entrée (66) de détection de l'intensité du courant traversant l'interrupteur et un moyen (61) pour limiter cette intensité.

12. Dispositif selon l'une quelconque des revendications précédentes, caractérisé en ce que l'interrupteur étant alternativement ouvert et fermé à une fréquence déterminée engendrée à partir d'une base de temps (22) et la vitesse du moteur étant fonction de la durée de conduction de l'interrupteur à chaque période de ce signal de fréquence déterminée, le dispositif comporte un moyen pour modifier la fréquence déterminée pour l'adapter au type d'interrupteur à commander.

13. Dispositif selon l'une quelconque des revendications précédentes, du type à entrée (9) de contreréaction sur laquelle est appliqué un signal dont la fréquence (ft) représente la vitesse réelle du moteur, caractérisé en ce qu'il comporte un moyen pour modifier un paramètre de la contreréaction en fonction du type d'interrupteur.

14. Dispositif selon l'une quelconque des revendications 1 à 11, caractérisé en ce que l'interrupteur étant alternativement ouvert et fermé à une fréquence déterminée, la vitesse du moteur étant fonction de la durée de conduction de l'interrupteur à chaque période de ce signal de fréquence déterminée, il comprend un moyen pour modifier la durée de conduction de l'interrupteur en fonction de la nature, alternative ou continue, du courant d'alimentation.

15. Dispositif selon l'une quelconque des revendications précédentes, caractérisé en ce qu'il est sous la forme d'un circuit intégré numérique.

16. Dispositif selon les revendications 5 et 15, caractérisé en ce que le circuit intégré est organisé pour que la partie séquenceur (38) soit localisée sur un seul niveau afin qu'une modification de sa fabrication pour modifier la séquence n'entraîne que la modification d'un masque à un seul niveau.

17. Machine à laver le linge à moteur universel ou moteur à courant continu pour entraîner son tambour et qui est alimentée en énergie électrique par l'intermédiaire d'un interrupteur commandé en fonction de la vitesse désirée, caractérisée en ce qu'elle comprend un dispositif selon l'une quelconque des revendications précédentes.

FIG.1

72
71
70
19
25
26
27
33
8
1
13
11
10
BASE DE TEMPS 22
28
58
7
9
32
12
76
30
31
40
20
23
60
65
67
21
14
29
62
61
66
15
64
18
39
63
5
16
17
2
24
75
3
4
42
57
SEQUENCEUR 38
52
48
43
47
56
6
50
46
44
53
49
45
35
36
37
54
51
PROGRAMMATEUR 34
55
73
105

0054460



FIG.2

50
35
36
37
76
100
98
99
105
106
107
97
104
96
34
102
103
83
95
101
84
72
71
70
87
88
82
81
6
92
55
54
91
9
8
90
1
89
67
80
86
75
2
87a
66

V(t/mn)
800
350
800
350
110
130
80
50
30
50
t

FIG.3a

FIG.3b

| | A | P | L | E | SE | L | RP | RL | E ou SE ou E + SE | | A | |
|---|---|---|---|---|---|---|---|---|---|---|---|---|
| 95 | 0 | 1 | X | 1 | 1 | X | X | X | X | X | 0 | LV1 |
| 96 | 0 | 0 | 1 | 0 | 0 | 1 | 1 | 1 | 1 | 1 | 0 | LV2 |
| 97 | X | 0 | 0 | 1 | 1 | 0 | 1 | 0 | 0 | 0 | 0 | RP1 |
| 98 | X | X | X | 0 | 1 | X | X | X | 0 | 1 | X | SE1 |
| 99 | X | X | X | X | | X | X | X | X | | X | |

CHOIX DE GAMME

V(t/mn)
750
425
135
130
50
50
136
130
425
50
137
750
130
50
t

FIG.5a

FIG.5b

| | A | L | L | RL | E ou SE ou E + SE | | A | RL | E | RL | SE | |
|---|---|---|---|---|---|---|---|---|---|---|---|---|
| 127 | 0 | 1 | 1 | 0 | 0 | 1 | 0 | 0 | 0 | 1 | 1 | LV2 |
| 128 | 0 | 0 | 0 | 1 | 1 | 0 | 0 | 1 | 1 | 0 | 0 | RP2 & SE1 |
| 129 | 0 | 0 | 0 | 0 | 0 | 1 | 0 | 0 | 0 | 1 | 1 | RP2 & SE1 |

FIG. 4

50
133
129
131
132
35
130
36
128
127
37
34 1
125
6
72
82 1
126
123
76
84
83
9
90
1
67
86
122
2
75
66
120
121

INI
RZ
X=0
AT
X=X
MS
F= $\overline{MS}$+MS. $\overline{RMP}$. $\overline{FDR}$
F
MS=1
RMP=0
FDR=0
RMP
FDR
PRG
PRG
LV1
PRG=0
LV2
FDR=0
LV2
RP2
RP1
SE1
FDR=0
SE1
SE1
PRG=0
PRG=1
EV
EF
PS
LV
RMP=0
X=CAN
X=350
X=30
X=50
RP1
RP2
RP 011
X=80
LV2
PRG=1
RMP=1
RP1
RMP=0
RMP=1
RA
X=x+4
PRG
FDR
LV2
RMP=0
RMP=0
FDR
RMP=0
SE1


FIG.6

DEBUT
MODE AUTONOME
OUI
AUTO/µp = 0
DONNEES sur 37
HORLOGE sur 36
AUTO/µP = 1
OUI
PROGRAMMATEUR TYPE 1
I1 max(ENTREE 36) ≥ 5,8 I0
3,5 I0 ≤ Imax (ENTREE 36) ≤ 5,2 I0
OUI
COMMUN PROGRAMMATEUR
SECTEUR
RESISTANCES EXTERIEURES de FORTE VALEUR
RESISTANCES EXTERIEURES de FAIBLE VALEUR
OUI
MOTEUR UNIVERSEL
PMR = 0
PMR = 1
FIN

FIG.7

Office européen des brevets

# RAPPORT DE RECHERCHE EUROPEENNE

Numéro de la demande
EP 81 40 1891

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| Y | FR - A - 2 297 273 (DOUBLEFELL)<br>* Page 8, ligne 23 - page 9, ligne 6; figures 1,2,3 *<br>-- | 1 | G 05 D 13/62<br>H 02 P 5/16<br>5/40<br>H 02 H 3/247<br>D 06 F 33/02 |
| Y | US - A - 3 784 846 (ROWAN CONTROLLER)<br>* Abrégé *<br>-- | 1 | |
| A | US - A - 3 686 554 (WHIRL POOL)<br>* Colonne 2, ligne 58 - colonne 4, ligne 3; colonne 10, lignes 31-62; figure 1 *<br>-- | 3,12, 14,15, 17 | DOMAINES TECHNIQUES RECHERCHES (Int. Cl. 3)<br>G 05 D 13/00<br>H 02 P 5/00<br>H 02 H 3/00<br>D 06 F 33/00 |
| A | DE - A - 2 722 041 (AGFA-GEVAERT)<br>* Page 10, ligne 1 - page 11, ligne 10; figure *<br>-- | 3,8 | |
| A | SIEMENS ZEITSCHRIFT, vol. 49, no. 12, décembre 1975, Erlangen, DE<br>G. RATH et al.: "Verarbeitung inkremental dargestellter Grössen mit SIMATIC C3", pages 791-795<br>* Page 793, colonne de droite, ligne 10 - page 794, colonne de droite, ligne 2; figure 6 *<br>-- | 3,5,6 | CATEGORIE DES DOCUMENTS CITES<br>X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |
| A | ASEA JOURNAL, vol. 49, no. 5, 1976 Vasteras, SE<br>K. JONSSON et al.: "Digital speed<br>./. | | |
| X | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 22-03-1982 | WEIHS |

Office européen
des brevets

# RAPPORT DE RECHERCHE EUROPEENNE

Numéro de la demande

EP 81 40 1891



| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| | control using ASEA's DS-8 system" pages 123-126 | | |
| | * Page. 125, colonne de milieu, ligne 25 - page 120, colonne de gauche, ligne 27; figure 4 * | 3,5, 14 | |
| | -- | | |
| A | US - A - 3 577 034 (ANOCONDA) | | |
| | * Abrégé * | 1 | |
| | ---- | | DOMAINES TECHNIQUES RECHERCHES (Int. Cl.³) |